# EUROPÄISCHE PATENTSCHRIFT

(11) **EP 1 126 184 B1**
(45) Veröffentlichungstag und Bekanntmachung des Hinweises auf die Patenterteilung: **05.07.2006**
(21) Anmeldenummer: 01103278.6
(22) Anmeldetag: 13.02.2001
(51) Int. Cl.: F16C 17/04, F16C 17/10

(54) **Lager**
Bearing
Palier

(30) Priorität: 19.02.2000 DE 10007709
(43) Veröffentlichungstag der Anmeldung: 22.08.2001
(73) Patentinhaber: Grundig Multimedia B.V., 1083HJ Amsterdam (NL)
(72) Erfinder: Wagner, Peter, 90471 Nürnberg (DE)
(74) Vertreter: Pröll, Jürgen

(56) Entgegenhaltungen:
- CH-A- 242 563
- FR-A- 2 657 720
- GB-A- 2 069 627
- US-A- 3 611 953
- US-A- 4 401 287
- US-A- 5 383 641

## Beschreibung

Die Erfindung betrifft ein Lager, insbesondere zur drehbaren Aufnahme eines Fernsehgerätes.

Nach dem Stand der Technik ist von der Firma Grundig AG ein auf einer Grundplatte drehbar gelagerter Fernseher bekannt. Das Lager weist ein scheibenförmiges Lagerelement auf. In darin vorgesehenen Durchbrüchen sind Kugeln aufgenommen, auf denen eine Lagerplatte drehbar gelagert ist.

Das bekannte Lager besteht aus vielen Teilen. Dessen Herstellung ist aufwendig.

Bei der US-A-3 611 953 sind diese Nachteile beseitigt. Nach der vorliegenden Erfindung soll ein Lager angegeben werden, das einfach und kostengünstig herstellbar ist und es sich insbesondere zur drehbaren Aufnahme eines Fernsehgerätes eignet.

Diese Aufgabe wird durch die Merkmale des Anspruchs 1 gelöst. Zweckmäßige Ausgestaltungen der Erfindung ergeben sich aus Merkmalen der Ansprüche 2 bis 5.

Nach Maßgabe der Erfindung ist ein Lager, insbesondere zur drehbaren Aufnahme eines Fernsehgerätes, vorgesehen, wobei eine Lagerplatte um eine Achse drehbar mit einer Grundplatte verbunden ist und wobei die Lagerplatte im Randbereich mittels eines die Achse konzentrisch umgebenden stegartig ausgebildeten Vorsprungs auf der Grundplatte gleitend abgestützt ist. Das Lager ist aus wenigen Teilen aufgebaut. Es ist einfach und kostengünstig herstellbar.

Die Grundplatte weist vorteilhafterweise eine Ausnehmung zum Einstecken der Achse auf. Sie kann ferner Durchbrüche aufweisen. Diese tragen zur Material- und Gewichtsersparnis bei.

Nach der Erfindung erstreckt sich der Vorsprung von der Grundplatte. Er ist zweckmäßigerweise um einen Winkel von 200 bis 330°, vorzugsweise 270°, umlaufend ausgebildet.

Die Lagerplatte ist zweckmäßigerweise in Form einer kreisrunden Scheibe ausgebildet, wobei der Vorsprung einen ersten und die Lagerplatte einen zweiten Durchmesser aufweist, und der erste Durchmesser größer als der zweite Durchmesser ist. Die Lagerplatte kann aus Metall, vorzugsweise Aluminium, oder aus spritzgegossenem Kunststoff hergestellt sein. Im letzteren Fall kann die Lagerplatte zur Erhöhung einer ausreichenden Steifigkeit wabenförmig angeordneten Stege oder ähnliche Versteifungsstrukturen aufweisen.

Von Vorteil ist es weiter, wenn die Grundplatte, vorzugsweise einstückig, aus Kunststoff hergestellt ist. Der Vorsprung ist aus einem Ringabschnitt gebildet, welcher in einer in der Grundplatte vorgesehenen, die Achse konzentrisch umgebenden Nut aufgenommen ist. Die Nut kann bezüglich des Querschnitts des Ringabschnitts hintergriffig ausgestaltet sein, so daß der Ringabschnitt in der Nut verrastbar ist. Der Querschnitt des Ringabschnitts ist vorzugsweise kreisförmig.

Ber Zumindest des Ringabschnitt, wahlweine auch die Grundplatte, sind aus einem Kunststoff mit Gleiteigenschaften, wie Tetrafluoräthylen, hergestellt. Bei der Ausführungsform mit separatem Ringabschnitt kann die Grundplatte aus einem preiswerten Kunststoff hergestellt werden. Lediglich der die Gleiteigenschaften aufweisende Ringabschnitt muß in diesem Fall aus vergleichsweise kostenaufwendigerem Tetrafluoräthylen hergestellt werden.
Die Lagerplatte kann nach einem weiteren Ausgestalungsmerkmal zwischen zwei flanschartigen Vorsprüngen der Achse gehalten sein. Selbstverständlich sind auf andere Befestigungsmöglichkeiten denkbar.

Nachfolgend wird ein Ausführungsbeispiel der Erfindung an der Zeichnung näher erläutert. Es zeigen:
- Fig. 1: eine perspektivische Ansicht der Unterseite einer Grundplatte,
- Fig. 2: eine Oberansicht der Grundplatte,
- Fig. 3: eine Seitenansicht gemäß Fig.2,
- Fig. 4: eine Querschnittsansicht gemäß der Schnittlinie A-A in Fig. 2,
- Fig. 5: eine Teilquerschnittsansicht gemäß der Schittlinie B-B in Fig. 5 und
- Fig. 6: eine perspektivische Ansicht eines Ringabschnitts.

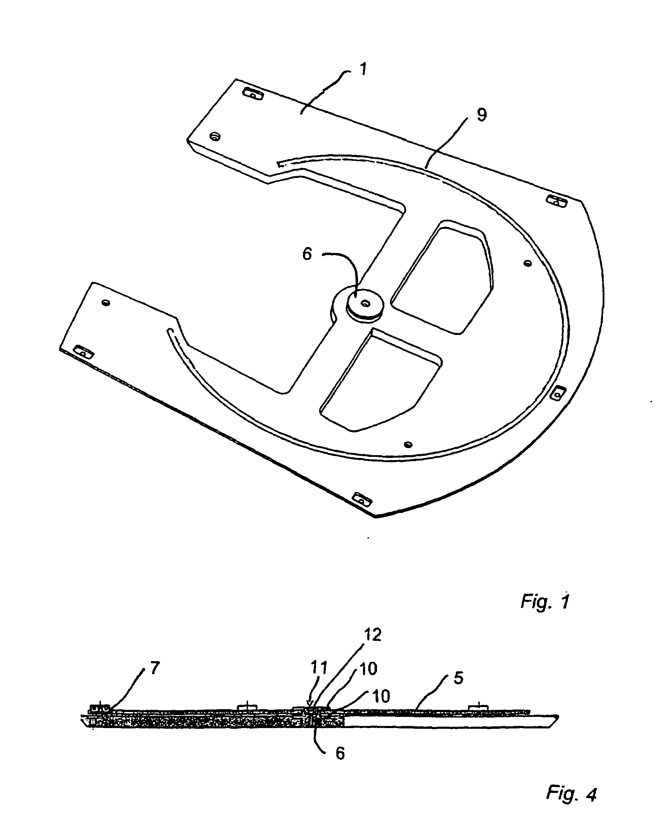

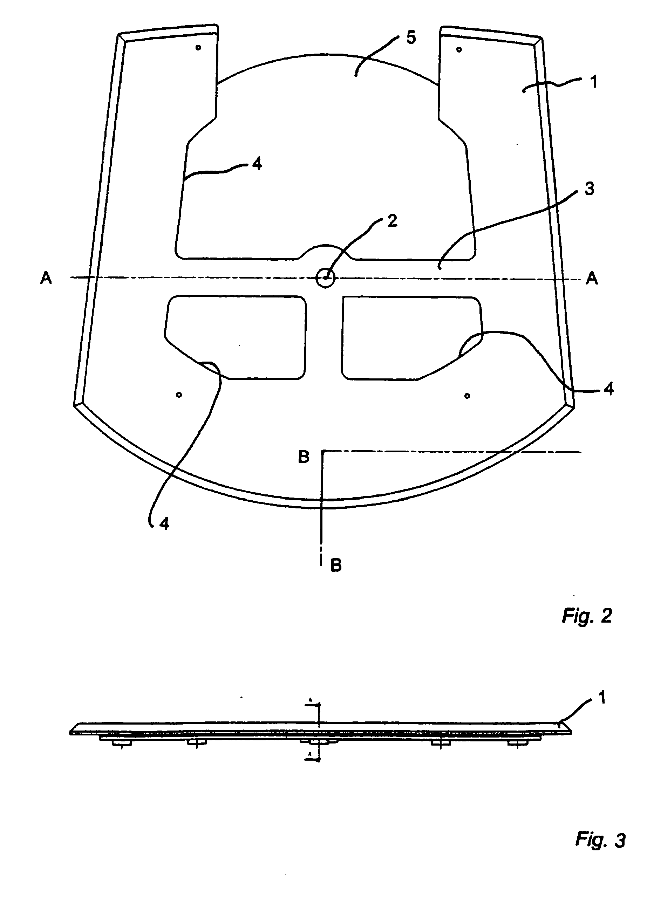

In den Fig. 1 - 5 ist mit 1 eine vorzugsweise aus spritzgegossenem Kunststoff hergestellte Grundplatte bezeichnet. Eine Ausnehmung 2 durchgreift die Grundplatte 1 im Schnittpunkt mehrerer Stege 3, welche durch das Vorsehen von Durchbrüchen 4 gebildet sind.

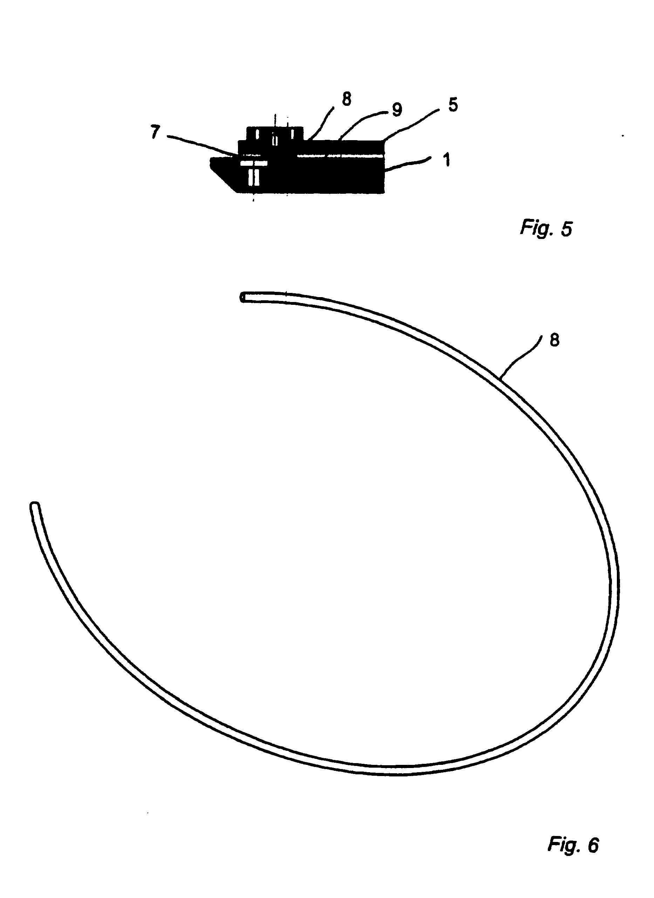

Wie insbesondere Fig. 4 deutlich hervorgeht, ist eine kreisförmig ausgebildete Lagerplatte 5 über einen sich konzentrisch um eine Achse 6 verlaufenden Vorsprung 7 abgestützt. Aus der Zusammensicht der Fig. 1 und 4 - 6 ist erkennbar, daß der Vorsprung 7 durch einen Ringabschnitt 8 gebildet ist, der in eine auf einer Unterseite der Grundplatte 1 vorgesehenen Nut 9 aufgenommen ist. Die Nut ist - wie aus Fig. 5 erkennbar ist hintergriffig ausgebildet. Der zweckmäßigerweise aus einem elastischen gleitfähigen Kunststoff, wie Tetrafluoräthylen, hergestellte Ringabschnitt 8 ist darin eingerastet. Der Ringabschnitt 8 weist vorzugsweise einen kreisrunden Querschnitt auf.

Wie aus den Fig. 1, 3 und 4 hervorgeht weist die Achse 6 flanschartige radial nach außen sich erstreckende Vorsprünge 10 auf, zwischen denen die Lagerplatte 5 klemmend gehalten ist. Ein Halteelement 11, welches den oberen flanschartigen Vorsprung aufweist, ist mittels einer Schraube 12 mit der Achse 6 verbunden.

Eine Kostenersparnis ergibt sich dadurch, daß lediglich der Vorsprung 7 durch Einstecken oder Verrasten des Ringabschnitts 8 in eine in der Grundplatte 1 vorgesehene Nut 9 hergestellt wird. In diesem Fall kann die Grundplatte 1 aus einem kostengünstigeren Kunststoff gefertigt werden.

Die Achse 6 kann entweder aus Aluminium oder aus spritzgegossenem Kunststoff hergestellt sein.

Das vorgeschlagene Lager besteht insgesamt gesehen aus wenigen Teilen. Es ist einfach und kostengünstig herstellbar. Es weist die für die drehbare Lagerung z.B. eines Fernsehgerätes erforderlichen Reibeigenschaften auf. Selbstverständlich ist das vorgeschlagene Lager auch zur Aufnahme anderer Geräte der Unterhaltungselektronik, zum Möbelbau oder dgl. geeignet.

### Bezugszeichenliste

- 1: Grundplatte
- 2: Ausnehmung
- 3: Steg
- 4: Durchbruch
- 5: Lagerplatte
- 6: Achse
- 7: Vorsprung
- 8: Ringabschnitt
- 9: Nut
- 10: flanschartiger Vorsprung
- 11: Schraube

## Patentansprüche

1. Lager, insbesondere zur drehbaren Aufnahme eines Fernsehgeräts, wobei eine Lagerplatte (5) um eine Achse (6) drehbar mit einer Grundplatte (1) verbunden ist, wobei die Lagerplatte (5) im Randbereich mittels eines die Achse (6) konzentrisch umgebenden Vorsprungs (7) auf der Grundplatte (1) gleitend abgestützt ist; wobei die Grundplatte (1) eine Ausnehmung (2) zum Einstecken der Achse (6) aufweist und wobei der Vorsprung (7) sich von der Grundplatte (1) erstreckt, **dadurch gekennzeichnet, dass** der Vorsprung (7) einen ersten und die Lagerplatte (5) einen zweiten Durchmesser aufweist und der erste Durchmesser größer als der zweite Durchmesser ist, wobei der Vorsprung (7) als separates Bauteil aus einem Ringabschnitt (8) gebildet ist, welcher in einer in der Grundplatte (1) vorgesehenen, die Achse konzentrisch umgebenden Nut (9) aufgenommen ist, wobei der Ringabschnitt (8) aus einem elastischen Kunststoff mit Gleiteigenschaften, wie Tetrafluoräthylen, hergestellt ist, insbesondere ist die Lagerplatte (5) zwischen zwei flanschartigen Vorsprüngen (10) der Achse (6) gehalten.

2. Lager nach einem der vorhergehenden Ansprüche, wobei die Grundplatte (1) Durchbrüche (4) aufweist.

3. Lager nach einem der vorhergehenden Ansprüche, wobei der Vorsprung (7) um einen Winkel von 200 bis 330°, vorzugsweise etwa 270°, umlaufend ausgebildet ist.

4. Lager nach einem der vorhergehenden Ansprüche, wobei die Lagerplatte (5) aus Metall, vorzugsweise Aluminium, oder aus spritzgegossenem Kunststoff hergestellt ist.

5. Lager nach einem der vorhergehenden Ansprüche, wobei die Grundplatte (1), vorzugsweise einstückig, aus Kunststoff hergestellt ist.

## Claims

1. Bearing, in particular for rotatably receiving a television set, wherein a bearing plate (5) is joined to a base plate (1) so as to be rotatable around a spindle (6), wherein the bearing plate (5) is supported in a sliding manner on the base plate (1) in the peripheral region by means of projection (7) that concentrically surrounds the spindle (6), wherein the base plate (1) has a cutout (2) for the insertion of the spindle (6) and wherein the projection (7) extends from the base plate (1), **characterized in that** the projection (7) has a first diameter and the bearing plate (5) has a second diameter, and the first diameter is greater than the second diameter, wherein the projection (7) is formed as a separate component from a ring segment (8) that is received in a groove (9) that is provided in the base plate (1) and concentrically surrounds the spindle, wherein the ring segment (8) is made of an elastic polymer having antifriction properties, such as tetrafluoroethylene, in particular the bearing plate (5) is held between two flange-like projections (10) of the spindle (6).

2. Bearing according to Claim 1, wherein the base plate (1) has openings (4).

3. Bearing according to either of the preceding claims, wherein the projection (7) is formed circumferentially over an angle of 200 to 330°, preferably about 270°.

4. Bearing according to any one of the preceding claims, wherein the bearing plate (5) is made of metal, preferably aluminium, or of injection-moulded polymer.

5. Bearing according to any one of the preceding claims, wherein the base plate (1) is made of polymer, preferably in one piece.

## Revendications

1. Support, en particulier pour recevoir en pivotement un téléviseur, dans lequel une plaque de support (5) est reliée à une plaque de base (1) avec possibilité de rotation autour d'un axe (6), dans lequel la plaque de support (5) s'appuie en coulissement sur la plaque de base (1) dans la région de bordure au moyen d'une saillie (7) qui entoure l'axe (6) de façon concentrique ; la plaque de base (1) présentant un évidement (2) pour enficher l'axe (6) et la saillie (7) s'étendant depuis la plaque de base (1),
**caractérisé en ce que** la saillie (7) présente un premier diamètre et la plaque de support (5) présente un second diamètre, et le premier diamètre est supérieur au second diamètre, ladite saillie (7) étant réalisée sous forme de composant séparé à partir d'un tronçon annulaire (8) qui est reçu dans une gorge (9) ménagée dans la plaque de base (1) et entourant l'axe de façon concentrique, ledit tronçon annulaire (8) étant réalisé en une matière plastique élastique présentant des propriétés de coulissement, comme du tétrafluoroéthylène, et la plaque de support (65) étant en particulier tenue entre deux projections (10) de l'axe (6) analogues à des brides.

2. Support selon l'une des revendications précédentes, dans lequel la plaque de base (1) présente des traversées (4).

3. Support selon l'une des revendications précédentes, dans lequel la saillie (7) est réalisée de façon circonférentielle sur un angle de 200 à 330°, de préférence environ 270°.

4. Support selon l'une des revendications précédentes les deux dans lequel la plaque de support (65) est réalisée en métal, de préférence en aluminium, ou en matière plastique moulée par injection.

5. Support selon l'une des revendications précédentes, dans lequel la plaque de base (1) est réalisée en matière plastique, de préférence d'une seule pièce.
